(19) **Europäisches Patentamt / European Patent Office / Office européen des brevets**

(11)  **EP 3 947 920 B1**

(12)  **FASCICULE DE BREVET EUROPEEN**

(45) Date de publication et mention de la délivrance du brevet:
**01.03.2023 Bulletin 2023/09**

(21) Numéro de dépôt: **20715887.4**

(22) Date de dépôt: **03.04.2020**

(51) Classification Internationale des Brevets (IPC):
**F01D 17/10** (2006.01)   **F02K 1/15** (2006.01)
**F02K 1/76** (2006.01)

(52) Classification Coopérative des Brevets (CPC):
**F02K 1/763; F01D 17/10; F02K 1/15;**
F05D 2260/80

(86) Numéro de dépôt international:
**PCT/EP2020/059599**

(87) Numéro de publication internationale:
**WO 2020/201522 (08.10.2020 Gazette 2020/41)**

(54) **PROCÉDÉ ET SYSTÈME DE SURVEILLANCE D'UN SYSTÈME D'ACTIONNEMENT D'UN ÉLÉMENT D'UNE TURBOMACHINE**

VERFAHREN UND SYSTEM ZUR ÜBERWACHUNG EINES SYSTEMS ZUR BETÄTIGUNG EINES BAUTEILS EINER TURBOMASCHINE

METHOD AND SYSTEM FOR MONITORING A SYSTEM FOR ACTUATING A COMPONENT OF A TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2019 FR 1903666**

(43) Date de publication de la demande:
**09.02.2022 Bulletin 2022/06**

(73) Titulaire: **SAFRAN AIRCRAFT ENGINES**
**75015 Paris (FR)**

(72) Inventeur: **SOULIE, Sébastien, Jacques, François, Michel**
**77550 MOISSY-CRAMAYEL (FR)**

(74) Mandataire: **Regimbeau**
**20, rue de Chazelles**
**75847 Paris Cedex 17 (FR)**

(56) Documents cités:
FR-A1- 2 913 067    FR-A1- 2 966 617
FR-A1- 2 983 236    FR-A1- 3 016 191
FR-A1- 3 024 803    US-A1- 2018 156 226

## Description

### DOMAINE DE L'INVENTION

La présente invention concerne le domaine des systèmes d'actionnement d'éléments de turbomachine au moyen de vérins. L'invention concerne plus particulièrement la surveillance de tels systèmes d'actionnement.

### ETAT DE LA TECHNIQUE

Une turbomachine comprend classiquement des modules présentant des éléments mobiles tels que des tuyères ou des aubes. Ces éléments doivent pouvoir bouger sur commande et leur mouvement est commandé au moyen d'un ou plusieurs vérins. Ces éléments mobiles forment les cinématiques du module considéré et sont classiquement actionnées par des vérins. Pour des raisons de sécurité et de redondance, on effectue, de manière standard, deux mesures de position sur le(s) vérin(s) au moyen d'un système indiquant un retour de position.

Pour des raisons de coût, il n'est pas possible de munir chaque vérin d'un tel système de retour de position. Ainsi, s'il y a un nombre supérieur à deux vérins, seuls deux vérins, appelés vérins maîtres, sont classiquement munis de tels retours de position.

Un tel retour de position est en fait une position mesurée des vérins en réponse à une consigne de position appliquée aux vérins. En effet, la position vérin permet de connaître le degré de mouvement de la cinématique du module, par exemple la position de la tuyère ou le degré de pivotement d'une aube.

De manière connue, les deux vérins doivent présenter le même retour de position en réponse à une même consigne. S'il y a un écart entre les positions mesurées des deux vérins, il existe un problème « d'écart de mesure entre vérin » qui est dû à une usure du système d'actionnement ce qui peut engendrer des pannes. Il a été constaté de multiples cas de messages de maintenance « écarts de mesures entre vérin » à répétition sur des systèmes d'actionnement ayant des temps de fonctionnement cumulés importants. Ces « écarts de mesures entre vérins » sont liés à une usure importante de la cinématique du système d'actionnement qui génère un décalage de position entre les deux vérins équipés de retour de position mais qui ne sont pas forcément caractéristiques d'une panne.

Cette recrudescence de pannes (réelles ou non) engendre des dépannages sous aile (réparation directement sur l'avion sans devoir déposer le système d'actionnement) et en atelier. Ces dépannages sont très coûteux en personnel et en temps (recherche de panne, échange de vérins).

Pour éviter ces opérations de maintenance et prolonger la durée de vie sous aile avant dépose, il existe un besoin d'améliorer la détection d'écarts de mesure entre vérins, faute de quoi cela peut entraîner une augmentation de constats d'écarts de mesure entre vérins au fur et à mesure du vieillissement des systèmes d'actionnement. Cette augmentation des messages d'écart réduit la disponibilité des moteurs et augmenter le coût lié aux opérations de maintenance. Le document FR3024803A1 divulgue un procédé de surveillance d'un système d'actionnement connu dans l'art antérieur.

Il existe donc un besoin pour améliorer la détection « d'écart de mesure entre vérin » en tentant compte de la spécificité due à l'usure normale du système d'actionnement.

### EXPOSE DE L'INVENTION

Un but de l'invention est de proposer un système de surveillance qui ne présente pas les inconvénients de l'art antérieur.

A ce titre, il est proposé, selon un premier aspect, un procédé de surveillance d'un système d'actionnement d'un élément mobile, notamment un élément mobile d'une turbomachine telle qu'une tuyère ou une aube, ledit système d'actionnement comprenant un dispositif de commande configuré pour délivrer une consigne de position à un premier vérin et un deuxième vérin, chaque vérin étant configuré pour délivrer une mesure de retour position en réponse à ladite consigne de position, le procédé étant mis en oeuvre dans un système de surveillance et comprenant,

- un premier mode de surveillance selon lequel des écarts entre les mesures de retour position des deux vérins sont détectés ;
- un deuxième mode de surveillance selon lequel des écarts entre les mesures de retour position des deux vérins ne sont pas détectés ;
  procédé dans lequel le deuxième mode est sélectionné dès lors qu'au moins une des deux mesures de retour position est en phase transitoire.

L'invention est avantageusement complétée par les caractéristiques suivantes, prises seules ou en une quelconque de leur combinaison techniquement possible

- le procédé comprend une détection (T1, T2) de la phase transitoire d'une mesure de retour position (12, 22) consistant à comparer (E3) un gradient d'une tension de mesure à un seuil.
- la tension de mesure est en phase transitoire si le gradient de la tension de mesure est supérieur audit seuil.
- la détection de la phase transitoire comprend une étape de confirmation de la phase transitoire consistant à détecter une phase transitoire de ladite tension de mesure pendant une durée prédéterminée, dite durée de confirmation.
- la durée prédéterminée est comprise entre 60 et 100 ms, typiquement 80ms.

Selon un deuxième aspect, l'invention concerne un système de surveillance d'un système d'actionnement d'un élément mobile pour une turbomachine, notamment un élément mobile d'une turbomachine telle qu'une tuyère ou une aube, ledit système d'actionnement comprenant un dispositif de commande configuré pour délivrer une consigne de position à un premier vérin et un deuxième vérin, chaque vérin étant configuré pour délivrer une mesure de retour position en réponse à ladite consigne de position, ledit système de surveillance comprenant une unité de traitement, ladite unité étant configurée pour mettre en oeuvre un procédé selon le premier aspect de l'invention.

Selon un troisième aspect, l'invention concerne une turbomachine comprenant un élément actionné par un système d'actionnement, le système d'actionnement étant surveillé au moyen d'un système de surveillance selon le deuxième aspect de l'invention.

Les avantages de l'invention sont multiples.

La détection des écarts de mesure de retour position entre chaque vérin permet de détecter les dérives électriques des composants de la chaîne d'acquisition du retour de position. Dans le cas de cinématiques contrôlées par deux vérins maîtres équipés chacun d'un retour de position, les écarts vus entre les deux vérins peuvent être d'origine électrique mais aussi mécanique. Par conséquent, les phénomènes transitoires de rattrapages de jeux ou d'usures viennent introduire de la non-robustesse dans les surveillances d'écart, des écarts étant à tort détectés.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 illustre un environnement de mise en oeuvre de l'invention.
- La figure 2 est un organigramme d'étapes d'un procédé selon un mode de réalisation de l'invention.
- La figure 3 illustre des problèmes résolus par l'invention.
- La figure 4 illustre des transitoires visibles et invisibles discriminés par l'invention ;
- La figure 5 est un organigramme de sous étapes d'un procédé selon un mode de réalisation de l'invention.

Sur l'ensemble des figures, les éléments similaires portent des références identiques.

## DESCRIPTION DETAILLEE DE L'INVENTION

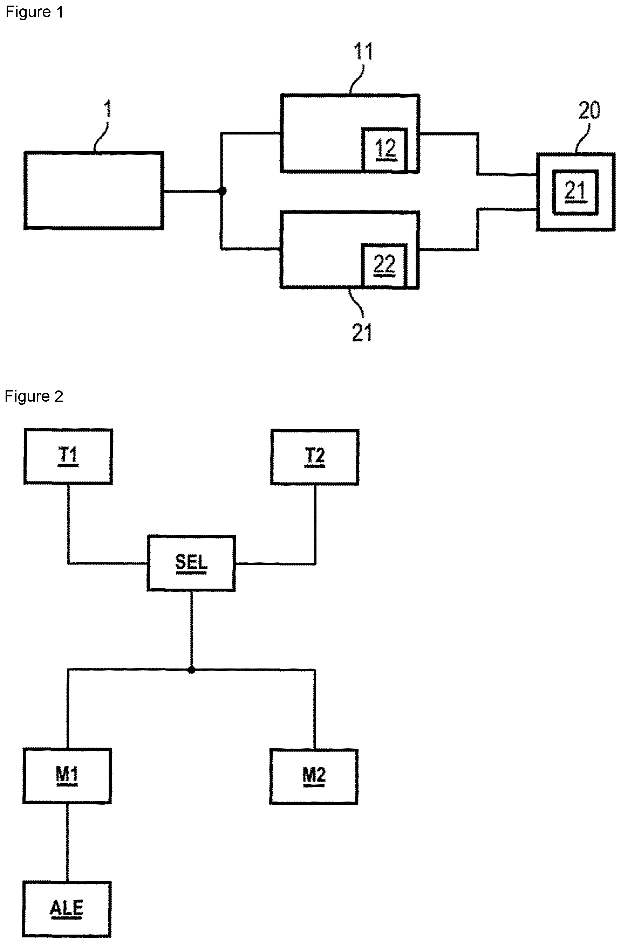

La **figure 1** illustre un système d'actionnement 10 d'un élément d'une turbomachine tel qu'une tuyère ou une aube qui comprend un dispositif de commande 1 configuré pour délivrer une consigne de position CONS à un premier vérin 11 et à un deuxième vérin 21. Le premier vérin 11 et le deuxième vérin 21 sont notamment des vérins dits « maîtres » d'un système d'actionnement : ils sont chacun muni d'un module de retour de position 12, 22. Les autres vérins, s'il y en a, ne sont pas équipés d'un tel module.

La consigne de position CONS est convertie en une tension de consigne pour commander le vérin 11, 21. Suite à l'application de la consigne de position CONS sur chaque vérin, chaque vérin 11, 21 se déplace conformément à ladite consigne CONS. Afin de vérifier que le vérin 11, 21 s'est déplacé de la consigne de position, chaque vérin 11, 21 est, comme mentionné ci-dessus ; équipé d'un module de retour de position 12, 22 qui mesure le déplacement effectif du vérin 11, 21 (ci-après mesure retour position 12, 22). Dans le cas présent, on entend par mesure de retour de position 12, 22 une tension mesurée proportionnelle au déplacement effectif du vérin 11, 21. L'homme du métier comprendra également qu'un autre type de signal correspondant au retour de position du vérin pourra être considéré.

Afin de vérifier le bon fonctionnement du système d'actionnement, les mesures de retour position 12, 22 issues des modules de retour de position sont communiquées à un système de surveillance 20 qui permet notamment d'évaluer les écarts de mesures de retour position 12, 22 de chaque vérin 11, 21. A ce titre, le système de surveillance 20 comprend une unité de traitement telle qu'un processeur pour mettre en oeuvre un procédé de surveillance décrit ci-après, en relation avec la **figure 2.**

Le système de surveillance 20 prend en entrée chaque mesure de retour de position 12, 22 issue des modules de retour de position.

Sur la base des mesures de retour de position 12, 22, une détection d'une phase transitoire (étapes T1, T2 respectivement) de la mesure de retour de position 12, 22 de chaque vérin 11, 21 est mise en oeuvre.

Une telle détection T1, T2 permet d'évaluer si la mesure de retour de position 12, 22 relative à chaque vérin 11, 21 est dans une phase transitoire c'est-à-dire non stabilisée et donc non fiable ou bien si elle est dans une phase stabilisée et considérée comme fiable En effet, la Demanderesse a constaté que les écarts de mesures de retour position entre vérins 11, 21 augmentaient lorsque ces mesures étaient dans une phase transitoire. On appelle phase transitoire la phase durant laquelle la cinématique est en mouvement.

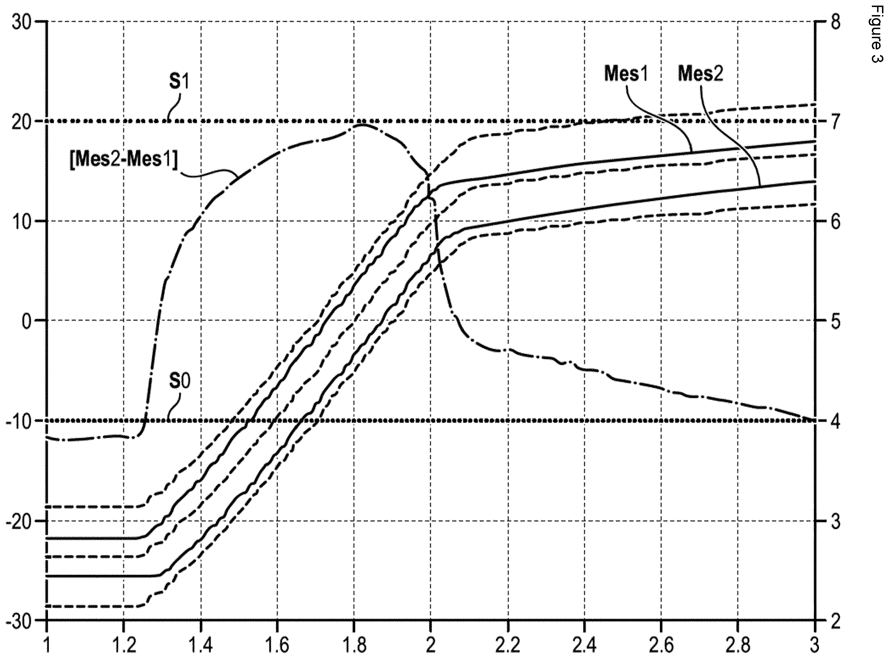

La **figure 3** illustre que le fait que les écarts entre de mesures entre les vérins 11, 21 augmentaient lors des phases transitoires. Sur ces figures on a représenté :

- la variation de la mesure de retour position du premier vérin 11 (courbe Mes1)
- la variation de la mesure de retour position du deuxième vérin 21 (courbe Mes2)
- la variation de l'écart entre les deux mesures (courbe |Mes2 - Mes1|)
- un premier seuil de détection S0 et un deuxième seuil de détection S1.

Ainsi, il a été constaté que même en augmentant le seuil de détection de S0 à S1 l'écart entre les deux mesures était toujours au-dessus du seuil S1 pendant une durée importante de sorte qu'il était difficile de paramétrer un seuil et une durée d'observation de l'écart (afin de s'assurer que l'écart était bien au-dessus du seuil) qui permettrait à la fois d'avoir une surveillance fiable (impacté par la définition d'un seuil de détection haut) et qui ne détecterait pas des fausses pannes.

En conséquence, compte tenu de ce constat, la Demanderesse propose de ne pas surveiller l'écart de mesure du retour position lors de ces phases transitoires puisque la surveillance dans ce cas n'est pas robuste c'est-à-dire qu'elle n'est pas fiable.

Ainsi, selon que les mesures de retour position présentent un caractère transitoire ou non, le procédé de surveillance mis en oeuvre par le système de surveillance comprend deux modes de surveillance qui peuvent être sélectionnés (étape SEL) en conséquence. On définit ainsi : un premier mode de surveillance M1 au cours duquel des écarts entre les mesure de retour position des deux vérins 11, 21 sont détectés ;
un deuxième mode de surveillance M2 au cours duquel des écarts entre les mesures de retour position des deux vérins 11, 21 ne sont pas détectés.

Le deuxième mode de surveillance M2 est sélectionné (étape SEL) dès lors qu'au moins une des deux mesures de retour position 12, 22 est en phase transitoire.

Ainsi, dès lors qu'une des deux mesures de retour de position est dans une phase transitoire de sélectionner le premier mode ou le deuxième mode de surveillance.

Lorsque le premier mode M1 est sélectionné, l'écart de mesure de retour de position 12, 22 permet de générer, si besoin, une alerte relative à un écart de mesure anormal ce qui va déclencher une maintenance (étape ALE). A ce titre un seuil de déclenchement est fixé et dépend des paramètres du système actionné et de son système d'actionnement.

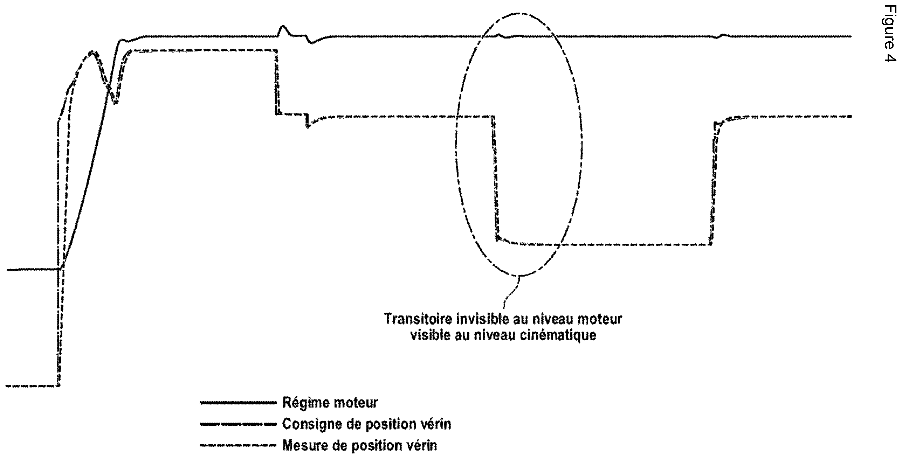

Pour pallier la variabilité des phases transitoires due au vieillissement du moteur, et/ou au mode de fonctionnement, et/ou au domaine de vol, et/ou aux types de manoeuvres (accélérations/décélérations lentes ou rapide), et pour avoir une gestion fine de la détection de la phase transitoire au niveau des vérins 11, 21, la détection de la phase transitoire est faite au moyen d'une surveillance d'un gradient de chacune des mesures de positions 12, 22 et non pas au niveau d'une phase transitoire du moteur lui-même (changement de régime/température/pression global du moteur et non juste du module considéré). En effet, il existe certaines phases transitoires visibles au niveau des vérins 11, 21 et pas au niveau du moteur comme le montre la **figure 4.** Ainsi, de manière avantageuse, le caractère transitoire de chaque mesure de retour de position 12, 22 est évalué en considérant le gradient de chaque mesure. Bien entendu d'autres possibilités d'obtention du caractère transitoire des mesures pourront être mis en oeuvre.

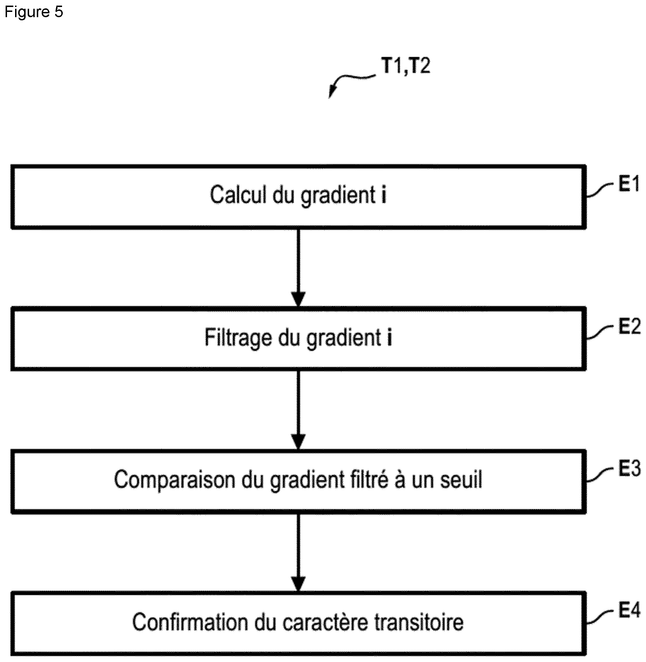

La détection du caractère transitoire (étapes T1, T2) comprend les étapes suivantes décrites en relation avec la **figure 5.**

Le gradient de la mesure de retour position, pour un vérin 11, 21 donné, est obtenu comme suit (étape E1) :

$$\text{gradient}_i = \text{mesure}_i - \text{mesure}_{i-1},$$

avec i et i-1 l'instant de prise de la mesure. Ainsi le gradient calculé à l'instant i est la différence entre deux mesures consécutives.

On élabore donc la détection de la phase transitoire sur la mesure de retour de position 12, 22 (image de la position réelle des vérins 11, 21) plutôt que sur la consigne de positionnement CONS des vérins 11, 21. En effet, la consigne CONS n'est pas représentative à tout instant du comportement réel des vérins 11, 21, notamment en fin de phase transitoire où la consigne CONS est stabilisée mais où les vérins 11, 21 terminent leur déplacement. Ceci présente l'inconvénient de présenter une mesure de retour de position 12, 22 bruitée électriquement et présentant des variations dues aux efforts appliqués sur les vérins 11, 21. Le gradient élaboré sur une telle mesure est donc d'autant plus bruité, imposant donc de réaliser la détection de phase transitoire sur une mesure de retour de position 12, 22 filtrée.

Le gradient calculé à l'instant i est alors filtré comme suit (étape E2) :

$$\text{Gradient\_filtré}_i = \text{gradient\_filtré}_{i-1} + \text{CTE.}(\text{gradient}_i - \text{gradient\_filtré}_{i-1}).$$

Le filtrage prend en compte deux valeurs du gradient calculées consécutivement.

La constante CTE du filtre est fixée en tenant compte des éléments suivants :

- une constante de temps importante permet de filtrer la majorité des perturbations électriques et mécaniques mais retarde de façon importante la détection du gradient et atténue fortement niveaux de variations de phase(s) transitoire(s) ;
- une constante de temps faible permet de détecter rapidement une phase transitoire mais favorise les fausses détections de phase(s) transitoire(s) dès lors qu'elles atteignent des niveaux proches du seuil (qui peut être assez faible suivant la dynamique de la cinématique aux points où la puissance hydromécanique est faible).

La valeur du gradient filtré à l'instant i est alors comparée à un seuil (étape E3). En particulier pour indiquer un caractère transitoire de la mesure de retour position 12, 22 du vérin 11, 21 considéré, il faut que cette valeur du gradient filtré à l'instant i soit supérieure à un seuil prédéterminé.

Afin de ne pas désactiver trop tôt la surveillance, ce caractère transitoire doit être confirmé, lors d'une étape de confirmation (étape E4).

Pour ce faire, le gradient filtré doit être supérieur à un certain seuil pendant une durée fixée à l'avance, appelée durée de confirmation. Une telle durée est typiquement comprise entre 60 et 100 ms, de préférence 80ms. La durée de confirmation doit être assez importante pour apporter de la robustesse sans être trop élevée pour ne pas engendrer trop de retard dans la désactivation de la surveillance des écarts. A ce titre, la durée de confirmation sera fonction de la durée de la phase transitoire la plus courte existante sur la cinématique. La durée de confirmation est donc fixée de manière empirique.

Si le caractère transitoire de la mesure de retour position du vérin 11, 21 considéré est confirmé, la surveillance de l'écart de mesure entre vérins 11, 21 est désactivée.

Une sélection du mode de surveillance est mise en oeuvre, le deuxième mode de surveillance M2 est sélectionné. Si ce n'est pas le cas, le premier mode de surveillance M1 est sélectionné.

La durée de confirmation est avantageuse pour deux raisons :

- le filtrage du gradient introduit un retard dans la détection du caractère transitoire et une atténuation de l'amplitude la valeur ce qui conduit à prévoir un abaissement du seuil de détection par rapport à une détection sur des valeurs non filtrées.
- l'abaissement du seuil de détection peut conduire à des détections intempestives de phases transitoire et ainsi désactiver la surveillance alors que cela n'est pas justifié. L'invention ci-dessus décrite présente avantageusement une détection de phase transitoire autoporteuse par rapport aux vérins 11, 21 du module considéré : elle ne dépend que de paramètres intrinsèques aux vérins 11, 21 en ne se basant ni sur l'état moteur (régime stationnaire, régime transitoire, etc...), ni sur la consigne CONS appliquée aux vérins 11, 21.

Dès lors, le système de surveillance 20 est rendu indépendant de tout mode de défaillance (départ d'une mesure en dérive électrique) et de toute variabilité moteur à moteur. De plus, la présente invention propose des moyens de pallier les défauts liés à l'utilisation de mesures brutes en introduisant un filtrage des mesures de retour position 12, 22 et une confirmation de début et de fin de phase transitoire. Enfin, la présente invention permet de rendre robuste la détection d'écart de mesure de position 12, 22 des vérins 11, 21 de en venant pallier les limitations liées à un élargissement de seuil et/ou de temporisation et donc d'améliorer le troubleshooting (surveillance) associé aux détections de pannes d'écart.

## Revendications

1. Procédé de surveillance d'un système d'actionnement (10) d'un élément mobile pour une turbomachine, notamment un élément mobile d'une turbomachine telle qu'une tuyère ou une aube, ledit système d'actionnement (10) comprenant un dispositif de commande (1) configuré pour délivrer une consigne (CONS) de position à un premier vérin (11) et un deuxième vérin (21), chaque vérin (11, 21) étant configuré pour délivrer une mesure de retour position (12, 22) en réponse à ladite consigne (CONS) de position, le procédé étant mis en oeuvre dans un système de surveillance (20) et comprenant,

- un premier mode de surveillance (M1) selon lequel des écarts entre les mesures de retour position (12, 22) des deux vérins (11, 21) sont détectés ;
- un deuxième mode de surveillance (M2) selon lequel des écarts entre les mesures de retour position (12, 22) des deux vérins (11, 21) ne sont pas détectés ;

procédé dans lequel le deuxième mode (M2) est sélectionné dès lors qu'au moins une des deux mesures de retour position (12, 22) est en phase transitoire.

2. Procédé selon la revendication 1, comprenant une détection (T1, T2) de la phase transitoire d'une mesure de retour position (12, 22) consistant à comparer (E3) un gradient d'une tension de mesure à un seuil.

3. Procédé selon la revendication précédente, dans lequel la tension de mesure est en phase transitoire si le gradient de la tension de mesure est supérieur audit seuil.

4. Procédé selon l'une des revendications 2 à 3, dans lequel la détection de la phase transitoire comprend une étape de confirmation de la phase transitoire consistant à détecter une phase transitoire de ladite tension de mesure pendant une durée prédéterminée, dite durée de confirmation.

5. Procédé selon la revendication précédente, dans lequel la durée prédéterminée est comprise entre 60 et 100 ms, typiquement 80ms.

6. Système de surveillance (20) d'un système d'actionnement (10) d'un élément mobile pour une turbomachine, notamment un élément mobile d'une turbomachine telle qu'une tuyère ou une aube, ledit système d'actionnement (10) comprenant un dispositif de commande (1) configuré pour délivrer une consigne (CONS) de position à un premier vérin (11) et un deuxième vérin (12), chaque vérin (11, 12) étant configuré (12, 22) pour délivrer une mesure de retour position en réponse à ladite consigne de position, ledit système de surveillance comprenant une unité de traitement, ladite unité étant configurée pour mettre en oeuvre un procédé selon l'une des revendications 1 à 5.

7. Turbomachine comprenant un élément actionné par un système d'actionnement, le système d'actionnement étant surveillé au moyen d'un système de surveillance (20) selon la revendication précédente.

## Patentansprüche

1. Verfahren zur Überwachung eines Systems zur Betätigung (10) eines beweglichen Elements für eine Turbomaschine, insbesondere eines beweglichen Elements einer Turbomaschine wie einer Düse oder einer Schaufel, wobei das System zur Betätigung (10) eine Steuervorrichtung (1) umfasst, die die konfiguriert ist, um einem ersten Zylinder (11) und einem zweiten Zylinder (21) einen Positionssollwert (CONS) zu erteilen, wobei jeder Zylinder (11, 21) konfiguriert ist, um einen Positionsrückmeldemesswert (12, 22) als Reaktion auf den Positionssollwert (CONS) zu erteilen, wobei das Verfahren in einem System zur Überwachung (20) umgesetzt wird, und Folgendes umfasst:

- einen ersten Überwachungsmodus (M1), bei dem Abweichungen zwischen den Positionsrückmeldemesswerten (12, 22) der beiden Zylinder (11, 21) erkannt werden;
- einen zweiten Überwachungsmodus (M2), bei dem Abweichungen zwischen den Positionsrückmeldemesswerten (12, 22) der beiden Zylinder (11, 21) nicht erkannt werden;

Verfahren, in dem der zweite Überwachungsmodus (M2) ausgewählt wird, sobald mindestens einer der beiden Positionsrückmeldemesswerte (12, 22) in einer Übergangsphase ist.

2. Verfahren nach Anspruch 1, umfassend eine Erkennung (T1, T2) der Übergangsphase eines Positionsrückmeldemesswerts (12, 22), die darin besteht, einen Gradienten einer Messspannung mit einem Schwellenwert zu vergleichen (E3).

3. Verfahren nach dem vorstehenden Anspruch, wobei die Messspannung in einer Übergangsphase ist, wenn der Gradient der Messspannung größer als der Schwellenwert ist.

**4.** Verfahren nach einem der Ansprüche 2 bis 3, wobei die Erkennung der Übergangsphase einen Schritt des Bestätigens der Übergangsphase umfasst, der darin besteht, eine Übergangsphase der Messspannung während einer vorbestimmten Dauer, die Bestätigungsdauer genannt wird, zu erkennen.

**5.** Verfahren nach dem vorstehenden Anspruch, wobei die vorbestimmte Dauer zwischen 60 und 100 ms, typischerweise bei 80 ms liegt.

**6.** System zur Überwachung (20) eines Systems zur Betätigung (10) eines beweglichen Elements für eine Turbomaschine, insbesondere eines beweglichen Elements einer Turbomaschine wie einer Düse oder einer Schaufel, wobei das System zur Betätigung (10) eine Steuervorrichtung (1) umfasst, die die konfiguriert ist, um einem ersten Zylinder (11) und einem zweiten Zylinder (12) einen Positionssollwert (CONS) zu erteilen, wobei jeder Zylinder (11, 12) konfiguriert (12, 22) ist, um einen Positionsrückmeldemesswert als Reaktion auf den Positionssollwert zu erteilen, wobei das System zur Überwachung eine Verarbeitungseinheit umfasst, wobei die Einheit konfiguriert ist, um ein Verfahren nach einem der Ansprüche 1 bis 5 umzusetzen.

**7.** Turbomaschine, umfassend ein Element, das durch ein System zur Betätigung betätigt wird, wobei das System zur Betätigung anhand eines Systems zur Überwachung (20) nach dem vorstehenden Anspruch überwacht wird.

**Claims**

**1.** A method of monitoring an actuating system (10) of a movable component for a turbomachine in particular a movable component of a turbomachine such as a nozzle or a blade, said actuating system (10) comprising a control device (1) configured to deliver a position command (CONS) to a first actuator (11) and a second actuator (21), each actuator (11, 21) being configured to deliver a position feedback measurement (12, 22) in response to said position instruction (CONS), the method being implemented in a monitoring system (20) and comprising the following steps:

- a first monitoring mode (M1) in which deviations between the position feedback measurements (12, 22) of the two cylinders (11, 21) are detected
- a second monitoring mode (M2) according in which deviations between the position feedback measurements (12, 22) of the two cylinders (11, 21) are not detected;

the second mode (M2) provided that at least one of the two position feedback measurements (12, 22) is in a transient phase.

**2.** The method according to claim 1, comprising detecting (T1, T2) the transient phase of a position feedback measurement (12, 22) by comparing (E3) a gradient of a measurement voltage to a threshold.

**3.** The method according to the preceding claim, wherein the measurement voltage is in a transient phase if the gradient of the measurement voltage is greater than said threshold.

**4.** The method according to any one of claims 2 to 3, wherein the detection of the transient phase comprises a step of confirming the transient phase consisting of detecting a transient phase of said measurement voltage for a predetermined periode, called confirmation period.

**5.** The method according to the preceding claim, wherein the predetermined period is comprised between 60 and 100 ms, typically 80ms.

**6.** System (20) for monitoring an actuating system (10) of a movable component for a turbomachine, in particular a movable component of a turbomachine such as a nozzle or a blade, said actuating system (10) comprising a control device (1) configured to deliver a position reference (CONS) to a first cylinder (11) and a second cylinder (12), each cylinder (11, 12) being configured (12, 22) to provide a position feedback measurement in response to said position instruction, said monitoring system comprising a processing unit configured for implementing a method according to any one of claims 1 to 5.

**7.** Turbomachine comprising a movable component actuated by an actuating, the actuating system being monitored by means of a monitoring system (20) according to the preceding claim.

Figure 1

Figure 2

Figure 3

Figure 4

Figure 5

T1,T2

| Calcul du gradient i | E1 |

| Filtrage du gradient i | E2 |

| Comparaison du gradient filtré à un seuil | E3 |

| Confirmation du caractère transitoire | E4 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3024803 A1